# EUROPEAN PATENT SPECIFICATION

(11) **EP 1 081 100 B1**
(45) Date of publication and mention of the grant of the patent: **25.10.2006**
(21) Application number: 00307552.0
(22) Date of filing: 01.09.2000
(51) Int. Cl.: C02F 11/02, B09B 5/00, B09B 3/00

(54) **Waste water treatment apparatus**
Vorrichtung zum Behandeln von Abwasser
Dispositif pour le traitement d'eaux usées

(30) Priority: 03.09.1999 JP 24962999
(43) Date of publication of application: 07.03.2001
(73) Proprietor: SANYO ELECTRIC CO., LTD., Moriguchi-shi, Osaka 570 (JP)
(72) Inventor: Fujimoto, Kenchi, Kato-gun, Hyogo-ken (JP); Tanimoto, Yoshihiro, Kanzaki-gun, Hyogo-ken (JP); Tamura, Toshihiro, Moriyama-shi, Shiga-ken (JP); Yoshida, Jun, Himeji-shi, Hyogo-ken (JP)
(74) Representative: Murnane, Graham John

(56) References cited:
- PATENT ABSTRACTS OF JAPAN vol. 1998, no. 13, 30 November 1998 (1998-11-30) -& JP 10 225674 A (MATSUSHITA ELECTRIC WORKS LTD), 25 August 1998 (1998-08-25)
- PATENT ABSTRACTS OF JAPAN vol. 1999, no. 09, 30 July 1999 (1999-07-30) & JP 11 104601 A (SANYO ELECTRIC CO LTD), 20 April 1999 (1999-04-20)
- PATENT ABSTRACTS OF JAPAN vol. 1999, no. 02, 26 February 1999 (1999-02-26) & JP 10 296113 A (SANYO ELECTRIC CO LTD), 10 November 1998 (1998-11-10)
- PATENT ABSTRACTS OF JAPAN vol. 018, no. 588 (C-1271), 10 November 1994 (1994-11-10) & JP 06 218349 A (SANYO ELECTRIC CO LTD), 9 August 1994 (1994-08-09)

## Description

### FIELD OF THE INVENTION

The invention relates to an apparatus for treating waste water containing crushed garbage discharged from a garbage crusher such as a disposer. Such apparatus will be hereinafter referred to as waste water treatment apparatus.

### BACKGROUND OF THE INVENTION

In recent years, waste water treatment apparatuses are designed in compact forms as compared with conventional apparatuses which utilize large purification tanks. In a modern design, use is made of a much smaller flow regulation tank for temporarily storing waste water, from which precipitates and supernatant are periodically transferred to further treatment sections so that the flow regulation tank will not overflow with the waste water, although it has a small capacity. Thus, unlike conventional purification tank buried in the underground, such modern apparatus can be conveniently installed on the ground.

Specifically, such modern waste water treatment system once stores garbage containing waste water from the disposer in the flow regulation tank to allow some solid components to sink or precipitate in the tank, which precipitates are transferred by some means such as an air lift to a solid-liquid separator to separate solids from water. The separated water is returned to the flow regulation tank, while the separated solids are transferred to a tank (hereinafter referred to as compost apparatus) for composting organic materials in the solids by bacteria, changing it to compost. The supernatant in the flow regulation tank is periodically transferred by a transport means such as an air lift to a treatment tank, where the content is subjected to aeration process so that organic components will be decomposed by bacteria. The supernatant in the treatment tank is allowed to flow into a precipitation tank by gravitational force, where sludge is allowed to precipitate. The supernatant in the precipitation tank is discharged to a sewage line and the precipitated sludge is returned to the flow regulation tank by a transport means such as an air lift.

When the waste water treatment apparatus is encased in a housing so that it can be installed outdoor, a multiplicity of maintenance ports must be provided in the housing in order to provide accesses to various pipes and driving mechanism for periodic maintenance including recovery of the compost from the compost apparatus and replacement of parts of the apparatus. When one of the maintenance ports is opened, the entire system must be stopped for safety and hygienic consideration.

In this way, in conventional waste water treatment apparatus, once any one of the ports is opened for some reason, the entire system is stopped and so is the treatment in the apparatus. Therefore, it takes some time before the apparatus can accept therein new waste water. In other words, when all the maintenance ports are closed, the level of the waste water in the flow regulation tank decreases as it is gradually processed, but if one of the ports is opened the water level in the flow regulation tank will not be lowered, since the entire system is stopped. Consequently, the apparatus cannot be used for a long period of time.

JP-A- 10 225674 discloses garbage-disposal equipment which includes a crusher, an effluent processing apparatus, and a compost apparatus. However, this equipment requires that the compost apparatus is stopped during maintenance.

JP-A-06 218 349 discloses a garbage processor having a impeller for stirring the garbage which is ground by a grinder and deposited in a processing tub. This processor does not have a waste water treatment apparatus, and the grinder and the impeller cannot be used if an opening-and-closing door of a processing tub is opened for checking the processing tub, because they are then stopped during the entire checking period.

Patent Abstracts of Japan, vol. 1999, no. 09, JP-A-11 104601 discloses a garbage treatment device which includes a disposer, first and second tanks, a solid-liquid separator, and a compost device. However, this document does not teach anything about the operability of the crusher during a maintenance period.

### SUMMARY OF THE INVENTION

It is therefore an object of the invention to provide a waste water treatment apparatus which can minimise time loss in the treatment of waste water due to maintenance, and maximise usable time for the users using the apparatus, without incurring any safety or hygienic problem.

According to the present invention, there is provided a waste water treatment apparatus for treating waste water containing crushed garbage discharged from a garbage crusher comprising a plurality of treatment sections encased in a housing, each of said treatment sections having respective maintenance ports characterised in that the apparatus comprises a control means adapted to stop the operation of the respective treatment section associated with the port when its respective maintenance port is open but permitting the operation of the other treatment sections not associated with the open port.

One particular treatment section under maintenance can be stopped during maintenance without incurring any safety problem or hygienic problem, thereby minimizing loss of time due to the maintenance and in turn maximizing usable time for the user.

The open/close condition of each port can be unmistakably detected and the treatment section associated with the open port can be automatically stopped by the controller, so that loss of time due to the maintenance is minimised and in turn usable time for the user is maximised.

The treatment of solid components is easy, and in addition, maintenance such as replacement of chips in the compost apparatus can be carried out quite easily without incurring any safety or hygienic problem to the user.

The compost apparatus can be easily pulled out by a user for replacement of chips in the compost apparatus.

The invention may advantageously prevent, in addition to the advantages mentioned above, a hygienic problem, for example spilling of the compost, that can be incurred by incomplete installation of the compost apparatus.

### BRIEF DESCRIPTION OF THE DRAWINGS

The invention will now be described in detail with reference to the accompanying drawings, with like reference numerals referring to like or corresponding elements throughout the drawings, in which:
Fig. 1 is a schematic diagram of a waste water treatment system including a waste water treatment apparatus using a disposer according to the invention;
Fig. 2 is a general view of the waste water treatment apparatus shown in Fig. 1;
Fig. 3 is a flowchart showing in steps operations of the waste water treatment apparatus of Fig. 1;
Fig. 4 is a general view of a second waste water treatment apparatus using a disposer according to the invention;
Fig. 5 schematically shows how the compost apparatus is pulled out from the housing of Fig. 4;
Fig. 6 is a general view of a third waste water treatment apparatus using a disposer according to the invention; and
Fig. 7 is a general view of a fourth waste water treatment apparatus using a disposer according to the invention.

### DETAILED DESCRIPTION OF THE PREFERRED EMBODIMENT

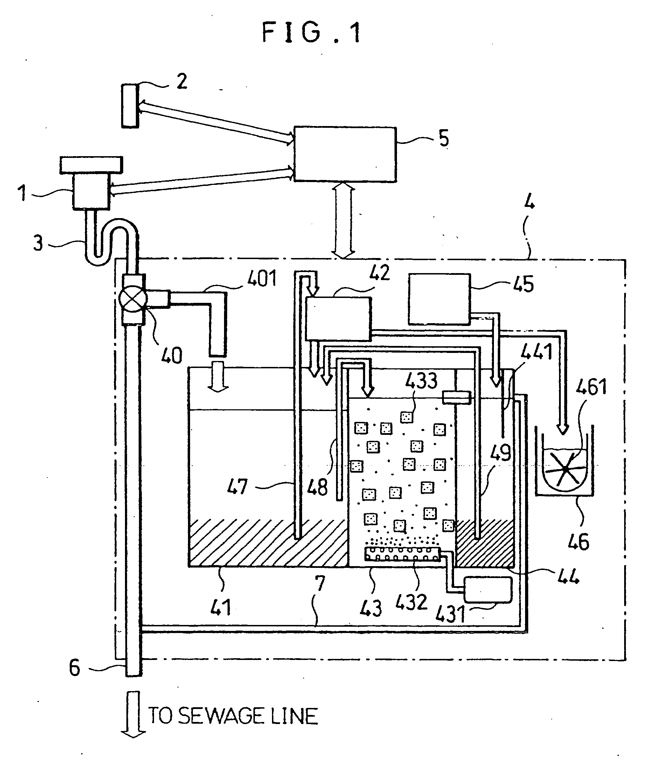

Referring now to Fig. 1, there is shown a waste water treatment system utilizing a disposer 1 connected to a kitchen sink, a control panel 2 for a user to control various operations of the system and confirm conditions of the system, a waste water treatment apparatus 4 connected to a drain pipe 3 from the disposer 1 for treating waste water containing crushed garbage discharged from the disposer 1, and a controller 5 having a microcomputer for controlling the entire components in the system including the disposer 1, the control panel 2, and the waste water treatment apparatus 4.

The waste water treatment apparatus 4 has: a flow regulation tank 41 for receiving, via a three-way valve 40, the waste water containing crushed garbage when the disposer is in use; a solid-liquid separator 42 for separating precipitated solid components from water; a treatment tank 43 for treating the supernatant therein transferred from the flow regulation tank 41; a precipitate separation tank 44 for precipitating sludge formed in and transferred from the treatment tank 43; a coagulant injector 45 for automatically injecting coagulant into the precipitate separation tank 44 to clean the supernatant in the precipitate separation tank 44; a compost apparatus (compost tank) 46 for treating the solid components coagulated in the solid-liquid separator 42; and air lift pumps 47, 48, and 49 for transporting waste waters between the tanks.

Air lift pumps are a type of pumps for pumping solid containing fluids in the pipes by the lift of air bubbles injected into the pipes. Although the air lift pumps 47, 48, and 49 are shown in Fig. 1 by simple light arrows, they actually have an air lift pipe and a blower pump. The blower pumps of the three air lift pumps may be substituted for by a single common blower pump equipped with a three-way valve for switching the pipes.

The flow regulation tank 41 is provided with an electrostatic type water level sensor (not shown) for example, which provides information indicative of the level of water in the tank to the controller 5, so that the water level is controlled by the controller such that it allows the operation of the disposer if the water level is lower than a predetermined level, but otherwise it prohibits the operation. At the same time, a display on the control panel 2 indicates whether the disposer 1 can be used or not. The flow regulation tank 41 is also provided with two air lift pumps 47 and 48, respectively, one for pumping the sludge in the flow regulation tank 41 to the solid-liquid separator 42, and another for pumping the supernatant to the treatment tank 43.

The solid-liquid separator 42 can be of a split type for example which consists of a curved comb-shaped separator edge and a parallelepiped rotational blades disposed over the separation edge, and a motor for driving the rotary blades.

On the other hand, the treatment tank 43 may be a tank for treating organic materials by microaerophilic bacteria in a well known process such as for example an activated sludge process, a contact aeration process, and a carrier fluidized bed process. The treatment tank 43 is ventilated by a blower pump 431 and an air diffuser 432. The treatment tank 43 shown in Fig. 1 is a carrier fluidized bed type treatment tank in which microaerophilic bacteria inhabits on circulated carriers 433.

Ordinary waste water drained from the kitchen sink without using the disposer is channeled to the sewage line 6 via the three-way valve 40.

On the other hand, when the disposer is in operation, the three-way valve 40 is switched so that waste water containing crushed solid garbage is channeled to the flow regulation tank 41 through the pipe 401.

A mixture of solids and water in the flow regulation tank 41 is pumped up to the solid-liquid separator 42 by the air lift pump 47, where water is separated from solids. The water separated by the solid-liquid separator 42 is returned to the flow regulation tank 41, and the solids are deposited in the compost apparatus 46. The supernatant in the flow regulation tank 41 is transported to the treatment tank 43 by the air lift pump 48.

In the treatment tank 43, organic materials are decomposed by the microaerophilic bacteria. Sludge formed in the treatment tank 43 overflows into the precipitate separation tank 44, where it is coagulated and precipitates on the bottom. The treated supernatant water in the precipitate separation tank 44 is discharged into the sewage line 6 through the drain pipe 7. Provided at the upper section of the precipitate separation tank 44 is a partition board 441 for preventing direct discharge of sludgy water from the treatment tank 43 into the sewage line via a drain pipe 7 as the sludge overflows into the tank 43.

Precipitating sludge in the precipitate separation tank 44 is removed therefrom back to the flow regulation tank 41 by the air lift pump 49. The sludge transferred to the flow regulation tank 41 is again mixed with fresh crushed garbage from the disposer 1 and sent to the solid-liquid separator 42 by the air lift pump 47 for further separation of water and solids. The solids are transferred to the compost apparatus 46 for further treatment.

Solid components collected in the compost apparatus 46 is periodically stirred by a stirrer 461 and decomposed by the bacteria incubated on wooden chips in the compost apparatus 46, and turned to compost, which is later collected as a fertilizer.

Operations of the entire waste water treatment system will now be described.

At the beginning of the operations, a user throws garbage into the disposer 1 after he has confirmed on a control panel 2 that the disposer 1 can be operated, and then turn on the switch on the control panel 2.

The throwing of the switch will cause the three-way valve 40 to establish a channel between the disposer and the waste water treatment apparatus 4 (i. e. between the disposer and flow regulation tank 41) before the disposer 1 is started. Subsequently the disposer 1 will be started, crushing the garbage, which will be transported to the flow regulation tank 41. The sludge accumulating in the precipitate separation tank 44 will be returned to the flow regulation tank 41 by the air lift pump 49.

Solid components in the sludge will precipitate in the flow regulation tank 41 in about half an hour. The supernatant in the flow regulation tank 41 is pumped to the treatment tank 43 by the air lift pump 48, and the precipitated solids are pumped to the solid-liquid separator 42 by the air lift pump 47. The sludge in the precipitate separation tank 44 is returned to the flow regulation tank 41.

In the solid-liquid separator 42, solid components are separated from liquid components and transferred to the compost apparatus 46, while the liquid components are returned to the flow regulation tank 41.

The above sequential operations will be repeated once in every 30 minutes, to thereby gradually treating crushed garbage stored in the flow regulation tank 41.

The compost apparatus 46 contains bacteria carriers in the form of wooden chips, as described previously, to promote decomposition of organic materials in the solids. The compost apparatus 46 is provided with a stirrer 461 to stir the content at a regular interval.

In the treatment tank 43, organic materials conveyed by the supernatant from the flow regulation tank 41 are decomposed by the bacteria. Overflowing supernatant in the treatment tank 43 is passed to the precipitate separation tank 44. The treatment tank 43 accommodates porous carriers 433 which helps maintain a desirable biological environment for the bacteria. The porous carriers 433 are put into circulation in the treatment tank 43 by air bubbles generated by an air diffuser 432 which spout the air supplied by the blower pump 431. The organic materials thus decomposed to sludge in the treatment tank 43 are sent to the precipitate separation tank 44 and precipitates therein, which precipitate is then returned to the flow regulation tank 41 by the air lift pump 49. The precipitate is recovered in the solid-liquid separator 42 together with solids garbage and sent to the compost apparatus 46 where the precipitate and the solids are further decomposed to make compost.

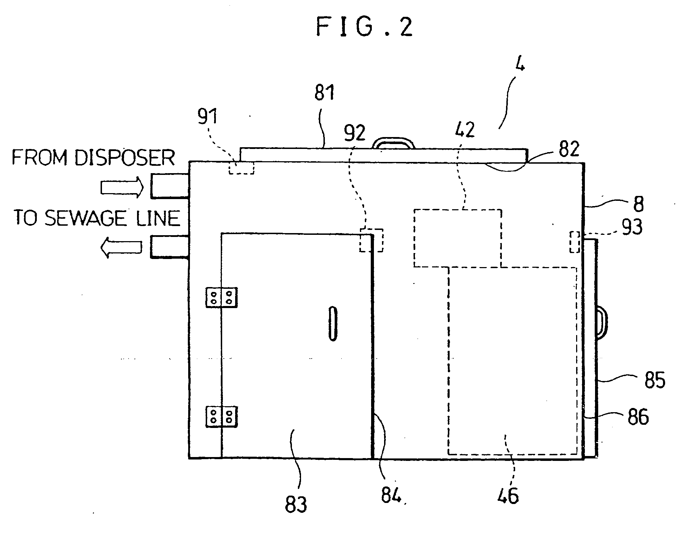

Fig. 2 shows a general view of the waste water treatment apparatus 4 which has a housing 8 for accommodating therein various treatment sections described above to treat waste water containing crushed garbage from the disposer 1. In Fig. 2, only the solid-liquid separator 42 and the compost apparatus 46 are shown by respective broken lines. It should be understood, however, that other treatment sections are also positioned in the same manner in the housing. For example, the flow regulation tank 41 and the compost apparatus 46 are disposed side by side in front section of the housing 8, while the treatment tank 43 and the precipitate separation tank 44 are disposed side by side in the rear section of the housing 8, such that the solid-liquid separator 42 extends over the flow regulation tank 41 and the compost apparatus 46 and the coagulant injector 45 is placed on top of the precipitate separation tank 44. Incidentally, the controller 5 shown in Fig. 1 may be installed either inside or outside the housing 8.

Formed in the upper end of the housing 8 is an upper maintenance port 82 having a lid 81. A front maintenance port 84 having a door 83, and a side maintenance port (which is the compost maintenance port) 86 having a door 85 are formed in the left corner of the front end and in the right end of the housing 8, respectively.

The maintenance ports 82, 84 and 86 are provided with door sensors 91, 92 and 93, respectively, for sensing whether the respective doors are open or closed. The outputs of the door sensors 91, 92, and 93 are supplied to the controller 5 shown in Fig. 1.

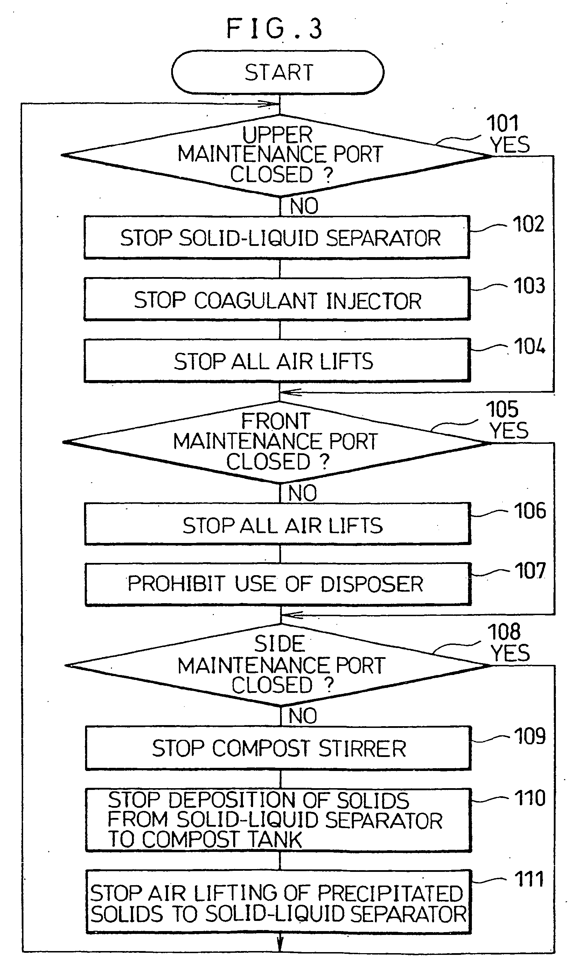

Referring now to Fig. 3, there is shown a flowchart showing the operations of the waste water treatment apparatus according to the invention. The operations shown in Fig. 3 is performed by a microcomputer of the controller 5.

In operation, the upper maintenance port 82 is determined (in Step 101) if it is open or closed based on the detection signal given by the door sensor 91. If the upper maintenance port 82 is not closed (Determination "NO" in Step 101), operations of the solid liquid separator 42 and the coagulant injector 45 are stopped (Steps 102 and 103), and at the same time all the pumping operations, including pumping of precipitated solids into solid-liquid separator 42, are stopped (Step 104).

Thus, even when the upper maintenance port 82 is not closed, the solid-liquid separator 42 and the coagulant injector 45 can be safely operated by motors and hygienic problems such as splashing of filthy waste water by the air lifts to maintenance personnel can be avoided. Under this condition, decomposition of solids in the compost apparatus 46 can be continued, and the user may use the disposer 1. It should be remembered that in order to use the disposer 1, the water level in the flow regulation tank 41 must presumably be lower than a predetermined level, as is the case in ordinary operations.

In the next Step 105, the condition of the front maintenance port 84 is checked based on the signal received from the door sensor 92. If the front maintenance port 84 is not closed (Determination "NO" in Step 105), pumping of the waste water is stopped (Step 106), and the user is prohibited from using the disposer 1 (Step 107). Since the disposer 1 cannot be used, the three-way valve 40 is inactivated.

If the front maintenance port 84 is not closed, hygienic problems that can arise from the use of the disposer 1 can be prevented. In addition, a hazard due to operation of the three-way valve 40 can be avoided.

Further, in Step 108, the side maintenance port (compost maintenance port) 86 is checked if it is opened or closed, based on the signal received from the door sensor 93. If the side maintenance port 86 is not closed (Determination "NO" in Step 108), operations related to the compost apparatus 46 are stopped. That is, the motor for driving the stirrer 461 in the compost apparatus 46 is stopped (Step 109), and deposition of solids from the solid-liquid separator 42 to the compost apparatus 46 is also stopped (Step 110). Further, the air lift 47 pumping the precipitated solids in the flow regulation tank 41 to the solid-liquid separator 42 is also stopped (Step 111).

With these measures, in the event when the side maintenance port 86 is not closed, a hazard that might be caused during the replacement of chips in the compost apparatus 46 can be avoided and also hygienic problem such as spilling of filthy solid materials that would take place can be avoided. In this case, other waste water treatments can be continued, so that the user is allowed to use the disposer 1. However, the use of the disposer 1 is allowed that the water level in the flow regulation tank 41 is lower than the predetermined level.

As described above, in accordance with the invention, the treatments performed in the various sections, only the treatment associated with the open maintenance port (among the maintenance ports 82, 84, and 86) may be stopped, so that hygienic or safety hazards that could otherwise arise will be avoided. The rest of the treatments can be continued. This permits minimization of maintenance time and hence the time loss in the waste water treatment, which in turn provides the user with maximum utility of the disposer 1.

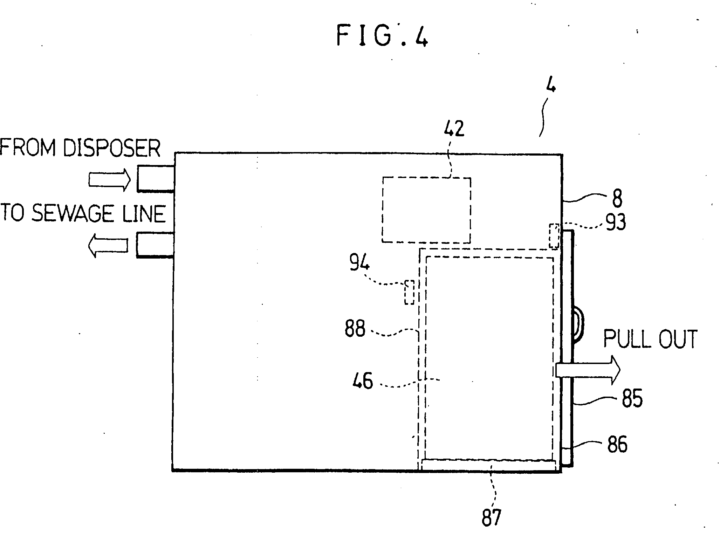

Referring now to Fig. 4, there is shown a second example of the waste water treatment apparatus of the invention, in which a user can open and close only the side maintenance port 86. The doors of the rest of the ports are securely shut using special screws (not shown). By limiting the user's access to the apparatus in this manner, safety and hygienic aspects of the apparatus can be improved.

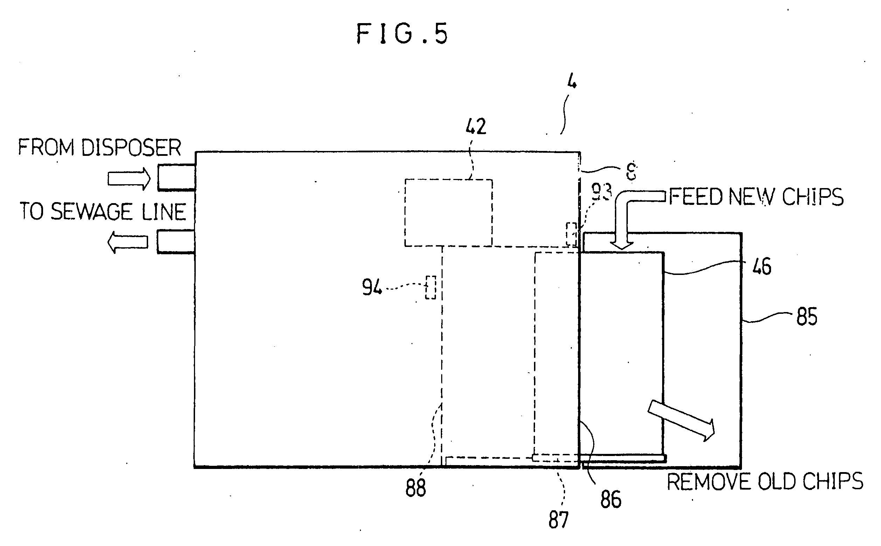

In the example shown herein, the compost apparatus 46 is installed in the housing 8 by means of slide rails 87. Thus, as shown in Fig. 5, the compost apparatus 46 can be moved smoothly on the slide rails 87 and easily pulled out of the housing 8, which facilitates replacement of old chips with new chips.

Formed inside the housing 8 is a partition wall 88 for separating the compost apparatus 46 from other sections except for the entrance to the compost apparatus 46. This partition wall can prevent flies and other insects from entering the compost apparatus 46 by some chance during the replacement of chips.

In addition to the door sensor 93 which detects the condition of the side maintenance port 86, a further sensor 94 may be provided for detecting whether or not the compost apparatus 46 is securely installed in position in the housing 8. In the event where the compost apparatus 46 is not installed properly, the deposition of solids from the solid-liquid separator 42 into the compost apparatus 46 is stopped based on the signals generated by the sensor 94. With this arrangement, should the user have pulled out the compost apparatus 46 as shown in Fig. 5 replaced the chips, but failed to re-install it properly in the housing 8, hygienic problem such as spilling of filthy solid materials that would take place can be avoided. Jolting of the compost apparatus 46 during stirring of the contents due to loose re-installation thereof by the user can be also prevented. The door sensor 94 of the compost apparatus 46 is preferably adapted to initiate the above mentioned procedure and inform the user of such improper installation of the compost apparatus 46 by showing an alarm on the control panel 2 for example.

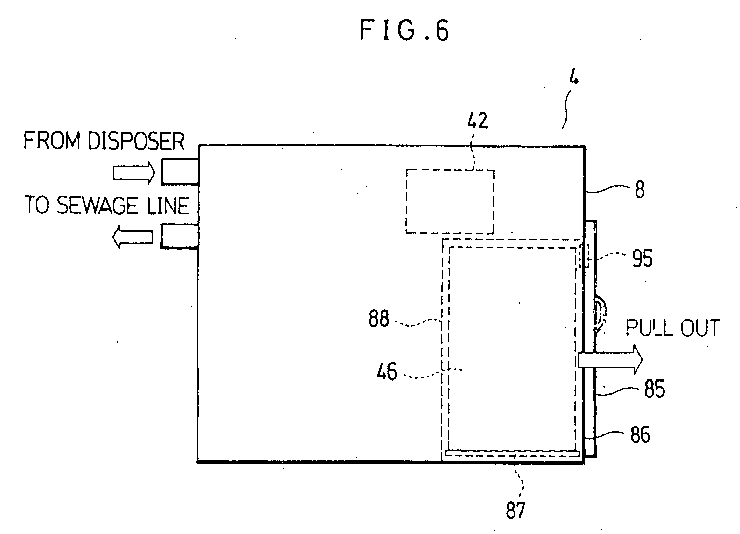

Referring now to Fig. 6, there is shown a third waste water treatment apparatus of the invention, in which a sensor 95 is provided between the door 85 of the side maintenance port 86 and the compost apparatus 46. The sensor 95 comprises a microswitch for example adapted to detect whether the side maintenance port 86 is closed and whether the compost apparatus 46 is installed in position in the housing. With this unique sensor 95, the same functions and the same results can be obtained as in the foregoing example in finding the conditions of the side maintenance port 86 and the compost apparatus 46, which allows cost-effective manufacture and maintenance of the apparatus.

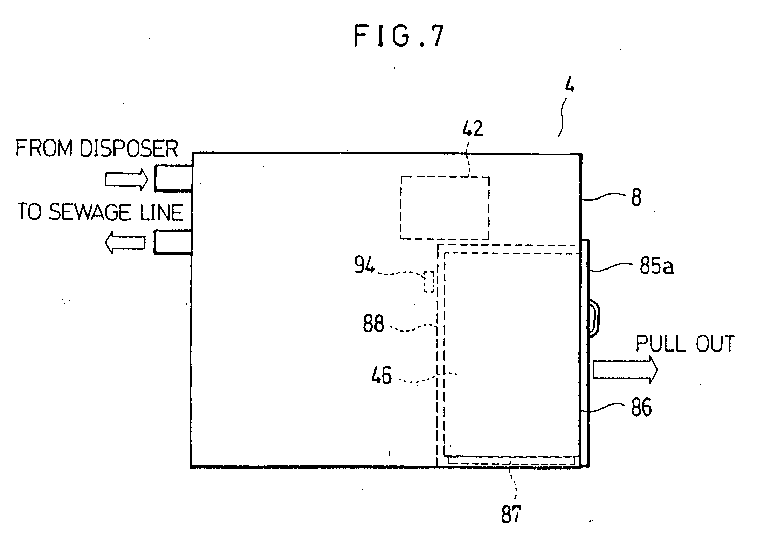

Referring now to Fig. 7, there is shown a further waste water treatment apparatus of the invention, in which the door 85a of the side maintenance port 86 is formed integral with the compost apparatus 46.

In this arrangement, the number of the elements required for the waste water treatment apparatus is reduced, which is helpful in reducing the manufacturing cost thereof. In this example, the sensor 94 may detect whether the side maintenance port 86 is closed and whether the compost apparatus 46 is installed in position in the housing, as in the foregoing example.

It will be understood that the waste water treatment apparatus 4 of the invention is not limited to the one shown in Fig. 1. For example, it is seen in Fig. 1 that the precipitate in the flow regulation tank 41 is air lifted to the solid-liquid separator 42, where the water is separated from the precipitate and returned therefrom to the flow regulation tank 41, while the supernatant in the flow regulation tank 41 is separately air lifted to the treatment tank 43. But instead, the water separated from the precipitate in the solid-liquid separator 42 may be passed to the treatment tank 43 like the supernatant in the flow regulation tank 41. An additional tank may be optionally provided, between the kitchen sink and the flow regulation tank 41, for storing waste water from the kitchen sink and transferring only concentrated waste water from the tank to the flow regulation tank 41 and discharge the overflowing supernatant to the sewage line 6.

Although the disposer 1 is used as a crusher in the examples shown herein, other types of crushers such as a meat grinder may be used equally well.

## Claims

1. A waste water treatment apparatus for treating waste water containing crushed garbage discharged from a garbage crusher (1) comprising a plurality of treatment sections encased in a housing (8), each of said treatment sections having respective maintenance ports (82, 84, 86) **characterised in that** the apparatus comprises a control means (5) adapted to stop the operation of the respective treatment section associated with the port (82, 84, 86) when its respective maintenance port (82, 84, 86) is open but permitting the operation of the other treatment sections not associated with the open port (82, 84, 86).

2. The waste water treatment apparatus according to claim 1, wherein each of said ports (82, 84, 86) is provided with a port sensor (91, 92, 93), each sensor being connected to control means (5), for detecting whether the port (82, 84, 86) is opened or closed with a respective door member (81, 83, 85).

3. The waste water treatment apparatus according to claim 1 or claim 2, wherein the following elements are divided between the treatment sections:
a flow regulation tank (41) for receiving said waste water containing garbage;
a solid-liquid separation apparatus (42) for separating the sludge pumped from said flow regulation tank (41) into solid and liquid components;
an aeration processing tank (43) for receiving therein the supernatant from said flow regulation tank (41) and for aerating said supernatant;
precipitate separation tank (44) for receiving the aerated supernatant from said aeration processing tank (43) and for transporting precipitated sludge to said flow regulation tank (41) while discharging the supernatant in said precipitate separation tank (44) to a sewage line (7); and
a compost apparatus (46) for receiving and composting said solid components.

4. The waste water treatment apparatus according to claim 3, **characterised in that** said compost apparatus (46) is provided with a pullout mechanism (87) for drawing said compost apparatus (46) out of said housing (8).

5. The waste water treatment apparatus according to claim 3 or claim 4, **characterised in that** it further comprises a detector (94) for detecting the installation condition of said compost apparatus (46) in said housing (8), said detector (94) being adapted to prohibit deposition of materials into said compost apparatus (46) for treatment of said material when said detector (94) detects abnormal installation of said compost apparatus (46) in said housing (8).

6. The waste water treatment apparatus according to claim 5, **characterised in that** it further comprises a detector (94/95) for detecting the condition of a door member (85) for the maintenance port (86) of said compost apparatus (46) and for detecting the installation condition of said compost apparatus (46) in said housing (8).

7. The waste water treatment apparatus according to any one of claims 3 to 6, **characterised in that** the door member (85a) of the maintenance port (86) of said compost apparatus (46) is formed integral with said compost apparatus (46).

## Patentansprüche

1. Eine Abwasseraufbereitungsvorrichtung zum Aufbereiten von Abwasser, das zerkleinerten Abfall enthält, der von einem Abfallzerkleinerer (1) abgegeben wird, der eine Vielzahl von mit einem Gehäuse (8) verkleideten Aufbereitungsabschnitten beinhaltet, wobei jeder der Aufbereitungsabschnitte entsprechende Wartungsöffnungen (82, 84, 86) aufweist, **dadurch gekennzeichnet dass** die Vorrichtung ein Steuermittel (5) beinhaltet, das angepasst ist, um den Betrieb des entsprechenden Aufbereitungsabschnitts, der mit der Öffnung (82, 84, 86) verbunden ist, zu stoppen, wenn seine entsprechende Wartungsöffnung (82, 84, 86) geöffnet ist, aber den Betrieb der anderen Aufbereitungsabschnitte, die nicht mit der geöffneten Öffnung (82, 84, 86) verbunden sind, ermöglicht.

2. Abwasseraufbereitungsvorrichtung gemäß Anspruch 1, wobei jede der Öffnungen (82, 84, 86) mit einem Öffnungssensor (91, 92, 93) versehen ist, wobei jeder Sensor an das Steuermittel (5) angeschlossen ist, um zu erkennen, ob die Öffnung (82, 84, 86) mit einem entsprechenden Türteil (81, 83, 85) geöffnet oder geschlossen ist.

3. Abwasseraufbereitungsvorrichtung gemäß Anspruch 1 oder Anspruch 2, wobei die folgenden Bestandteile zwischen den Aufbereitungsabschnitten aufgeteilt sind:
ein Ausgleichstank (41) zum Empfangen des Abwassers, das Abfall enthält;
eine Festkörper-Flüssigkeits-Trennungsvorrichtung (42) zum Trennen des Klärschlamms, der aus dem Ausgleichstank (41) in feste und flüssige Komponenten gepumpt wird;
ein Verarbeitungstank mit Belüftung (43) zum Empfangen des Überstandwassers aus dem Ausgleichstank (41) darin und zum Belüften des Überstandwassers;
ein Fällungsprodukt-Trennungstank (44) zum Empfangen des belüfteten Überstandwassers aus dem Verarbeitungstank mit Belüftung (43) und zum Transportieren von ausgefälltem Klärschlamm zu dem Ausgleichstank (41), während das Überstandwasser in dem Fällungsprodukt-Trennungstank (44) an eine Schmutzwasserleitung (7) abgegeben wird; und
eine Kompostvorrichtung (46) zum Empfangen und Kompostieren der festen Komponenten.

4. Abwasseraufbereitungsvorrichtung gemäß Anspruch 3, **dadurch gekennzeichnet, dass** die Kompostvorrichtung (46) mit einem Auszugsmechanismus (87) versehen ist, um die Kompostvorrichtung (46) aus dem Gehäuse (8) herauszuziehen.

5. Abwasseraufbereitungsvorrichtung gemäß Anspruch 3 oder Anspruch 4, **dadurch gekennzeichnet, dass** sie ferner einen Detektor (94) zum Erkennen des Installationszustands der Kompostvorrichtung (46) in dem Gehäuse (8) beinhaltet, wobei der Detektor (94) angepasst ist, um die Ablagerung von Materialien in der Kompostvorrichtung (46) zur Aufbereitung des Materials zu verhindern, wenn der Detektor (94) anormale Installation der Kompostvorrichtung (46) in dem Gehäuse (8) erkennt.

6. Abwasseraufbereitungsvorrichtung gemäß Anspruch 5, **dadurch gekennzeichnet, dass** sie ferner einen Detektor (94/95) zum Erkennen des Zustands eines Türteils (85) für die Wartungsöffnung (86) der Kompostvorrichtung (46) und zum Erkennen des Installationszustands der Kompostvorrichtung (46) in dem Gehäuse (8) beinhaltet.

7. Abwasseraufbereitungsvorrichtung gemäß einem der Ansprüche 3 bis 6, **dadurch gekennzeichnet, dass** der Türteil (85a) der Wartungsöffnung (86) der Kompostvorrichtung (46) integral mit der Kompostvorrichtung (46) gebildet ist.

## Revendications

1. Un appareil de traitement des eaux usées destiné à traiter des eaux usées contenant des déchets broyés déversés d'un broyeur de déchets (1) comportant une pluralité de sections de traitement encaissées dans un logement (8), chacune desdites sections de traitement ayant des orifices d'entretien respectifs (82, 84, 86) **caractérisé en ce que** l'appareil comporte un moyen de contrôle (5) adapté pour arrêter le fonctionnement de la section de traitement respective associée à l'orifice (82, 84, 86) lorsque son orifice d'entretien respectif (82, 84, 86) est ouvert mais permettant le fonctionnement des autres sections de traitement qui ne sont pas associées à l'orifice ouvert (82, 84, 86).

2. L'appareil de traitement des eaux usées selon la revendication 1, dans lequel chacun desdits orifices (82, 84, 86) est pourvu d'un capteur pour orifice (91, 92, 93), chaque capteur étant raccordé au moyen de contrôle (5), afin de détecter si l'orifice (82, 84, 86) est ouvert ou fermé avec un élément formant porte respectif (81, 83, **85).**

3. L'appareil de traitement des eaux usées selon la revendication 1 ou la revendication 2, dans lequel les unités qui suivent sont réparties entre les sections de traitement :
un réservoir de régulation d'écoulement (41) destiné à recevoir lesdites eaux usées contenant des déchets ;
un appareil de séparation solide-liquide (42) destiné à décomposer les boues pompées depuis ledit réservoir de régulation d'écoulement (41) en composants solides et liquides ;
un réservoir de traitement d'aération (43) destiné à recevoir dans celui-ci le surnageant depuis ledit réservoir de régulation d'écoulement (41) et destiné à aérer ledit surnageant ;
un réservoir de séparation de précipité (44) destiné à recevoir le surnageant aéré depuis ledit réservoir de traitement d'aération (43) et destiné à transporter les boues précipitées jusqu'audit réservoir de régulation d'écoulement (41) tout en déversant le surnageant dans ledit réservoir de séparation de précipité (44) jusqu'à une canalisation d'égout (7) ; et
un appareil à composter (46) destiné à recevoir et à composter lesdits composants solides.

4. L'appareil de traitement des eaux usées selon la revendication 3, **caractérisé en ce que** ledit appareil à composter (46) est pourvu d'un mécanisme d'extraction (87) destiné à tirer ledit appareil à composter (46) hors dudit logement (8).

5. L'appareil de traitement des eaux usées selon la revendication 3 ou la revendication 4, **caractérisé en ce qu'**il comporte en outre un détecteur (94) destiné à détecter l'état d'installation dudit appareil à composte (46) dans ledit logement (8), ledit détecteur (94) étant adapté pour empêcher la dépôt de matériaux dans ledit appareil à composter (46) pour le traitement dudit matériau lorsque ledit détecteur (94) détecte une installation anormale dudit appareil à composter (46) dans ledit logement (8).

6. L'appareil de traitement des eaux usées selon la revendication 5, **caractérisé en ce qu'**il comporte en outre un détecteur (94/95) destiné à détecter l'état d'un élément formant porte (85) pour l'orifice d'entretien (86) dudit appareil à composter (46) et destiné à détecter l'état d'installation dudit appareil à composter (46) dans ledit logement (8).

7. L'appareil de traitement des eaux usées selon n'importe laquelle des revendications 3 à 6, **caractérisé en ce que** l'élément formant porte (85a) de l'orifice d'entretien (86) dudit appareil à composter **(46) est formé de façon solidaire avec ledit appareil à composter (46).**
